# EUROPEAN PATENT APPLICATION

(11) **EP 0 715 065 A1**
(43) Date of publication of application: **05.06.1996**
(21) Application number: 95118787.1
(22) Date of filing: 29.11.1995
(51) Int. Cl.: F02B 33/26, F02B 29/04

(54) **Supercharged engine structure for motorcycles**

(30) Priority: 30.11.1994 JP 296169/94; 30.11.1994 JP 296170/94
(71) Applicant: YAMAHA HATSUDOKI KABUSHIKI KAISHA, Iwata-shi Shizuoka-ken, 438 (JP)
(72) Inventor: Tsuchida, Naoki, c/o Yamaha Hatsudoki K.K., Iwata-shi, Shizuoka-ken (JP); Makino, Kenmu, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

The present invention relates to a supercharged engine structure (15) for a motorcycle (2) comprising a connecting rod (25) substantially dividing an interior of a crankcase into first and second air chambers (B), wherein the first air chamber (A) is connected to an air introduction unit via an air cleaner (35) while the second air chamber (B) connects to a combustion chamber via an intercooler which cools the air output from said second air chamber (B) and an air intake passage connected to an outlet of said intercooler (36), wherein said second air chamber (B) serves as a compression chamber and said connecting rod (25,33) forming a compressor element by changing an effective internal volume of the crankcase. In order to reduce or inhibit the inflow of lubricating oil from the crankcase compression chamber to the combustion chamber, an outlet of said intercooler (36) being located at an upper portion of said intercooler (36).

## Description

The present invention relates to a supercharged engine structure for a motorcycle comprising a connecting rod substantially dividing an interior of a crankcase into first and second air chambers, wherein the first air chamber is connected to an air introduction unit via an air cleaner while the second air chamber connects to a combustion chamber via an intercooler which cools the air output from said second air chamber and an air intake passage connected to an outlet of said intercooler, wherein said second air chamber serves as a compression chamber and said connecting rod forming a compressor element by changing an effective internal volume of the crankcase.

In recent years, a supercharger using a connecting rod supercharging mechanism that uses the excursion of the connecting rod(s) to compress the air drawn into the crank chamber to supply the combustion chamber with pressurized air has been proposed in order to improve engine output (e.g. see Japan Patent Application *Kokai* Publication Hei 6-93869).

The above described supercharger requires considerable space for an air cleaner to filter the air supply to the connecting rod supercharger device, further for the intercooler that cools the air warmed from compression, and for the supercharger tank which controls the pressure fluctuations of the pressurized air being supplied to the cylinder, and space is also required for air lines and the like that link the component parts together.

Depending upon the piping arrangements which link the supercharger, intercooler, and supercharging tank in engines equipped with the above described connecting rod supercharging device, there is the concern that lubricating oil intermixed with the pressurized air might flow into the engine and in some cases adversely affect its performance.

Accordingly, it is an objective of the present invention to provide a supercharged engine structure as indicated in the preamble portion which improves the engine performance by at least reduction or prevention of lubricating oil flowing into the engine, particularly flowing into the combustion chamber.

This objective is performed by a supercharged engine structure as indicated in the preamble portion of claim 1, wherein said outlet of said intercooler being located at an upper portion of said intercooler.

Accordingly, the mixture of pressurized air and lubricating oil cools down during passing of cooling channels of an intercooler, so that lubricating oil drops downward by its own weight and pressurized air flows separated from said lubricating oil through the outlet located at an upper portion of said intercooler. Thus, the amount of lubricating oil reaching the upstream air intake passages and the combustion chamber of the engine is drastically reduced.

According to a preferred embodiment of the present invention, said outlet of said intercooler being located within an upper half of said intercooler preferably at the uppermost side area of said intercooler and an inlet of said intercooler being also located adjacent the uppermost side area.

Accordingly, as to the disposal of the outlet of the intercooler above the vertical center and preferably at the uppermost side area of said intercooler further improves separation of lubricating oil from the pressurized air. If having also the inlet of said intercooler being located adjacent the uppermost side area, back flow of lubricating oil into the crankcase is reduced, so that the lubricating oil mixed with the pressurized air is to be collected within the intercooler.

Preferably, an oil reservoir being formed in the bottom of said intercooler in order to collect the lubricating oil separated from said pressurized air.

According to a further preferred embodiment, said outlet of said intercooler being connected to said combustion chamber via a supercharger tank for storing pressurized air in a carburetor, wherein an inlet of said supercharger tank being located at a lower position of said supercharger tank and above an oil reservoir which is formed by a bottom wall of said supercharger tank in an outlet of said supercharger tank being located at an upper portion of said supercharger tank.

Therefore, further separation of lubricating oil from said pressurized air mixture is performed due to the heavier lubricating oil molecules.

According to a further preferred embodiment, said engine lying within a motorcycle frame is disposed such that the first air chamber and associated air inlet are located at a bottom area of said engine and said second air chamber and an associated air outlet are located at a top area of said engine.

Such an arrangement forms the first separation stage, as the lubricating oil falls by its own weight in the direction of the first air chamber, while the lubricating oil separated also serves as a sealing agent inside the crankcase at the sliding surfaces between the connecting rod etc. and the inside walls, thereby improving the air seal and increasing the supercharging pressure.

According to yet a further preferred embodiment, said air cleaner is provided with an air inlet which opens in a direction toward the engine at an upper top location of said air cleaner and an air outlet which opens adjacent said crankcase air inlet located at a bottom area of said air cleaner.

Accordingly, the air cleaner element is prevented from being contaminated by lubricating oil which is contained in blown-back air from the first air chamber. Furthermore, the intake drag is reduced due to the reduced necessary passage length of the air intake pipe connecting the outlet of the air cleaner with the inlet of the crankcase. Moreover, rain water is prevented from entering the inlet of the air cleaner as said air inlet opens in a direction toward the engine which is inside the side cover of the motorcycle.

According to yet a further preferred embodiment of the present invention, said supercharger tank being located on the same side and above said transmission case arranged on the opposite side relative to a muffler, wherein said supercharger tank outlet is disposed at substantially the same height of an inlet of said carburetor. Furthermore, said intercooler being located on the same side of the crankcase as said muffler and in front of said muffler.

Accordingly, there is no engine component provided which would be disposed above the muffler, so that the possibility of lubricating oil dropping onto the hot surface of said muffler is low and further generation of white smoke is prevented. Moreover, said disposal of said intercooler is advantageous in that no additional electric fan is required to cool the intercooler and, on the other hand the coolant air already passed said intercooler also serves as coolant air guided in a cooling passage around the cylinder head.

According to yet a further preferred embodiment, said intercooler, said air cleaner and said supercharger tank are connected with the cylinder block so as to form a unit swing-type engine and swing together substantially free from displacement relatively to each other. Thus, the above-mentioned component parts of said engine do not move relatively to each other so that flexible means to connect the component parts is dispensable and thereby allowing a simpler structure.

Further preferred embodiments are laid down in the further subclaims.

Hereinafter, the present invention is explained in greater detail by means of an embodiment thereof which is illustrated in the associated drawings, wherein:
Figure 1 is an enlarged side view of a supercharged engine structure within a motorcycle according to an embodiment of the present invention,
Figure 2 is an enlarged top view of the supercharged engine structure according to figure 1,
Figure 3 is an enlarged rear view of the supercharged engine structure according to figure 1,
Figure 4 is a side view of a scooter-type motorcycle equipped with the supercharged engine structure according to figure 1,

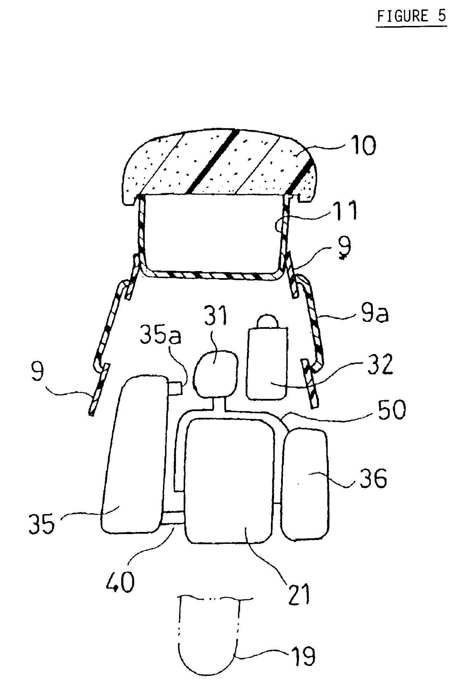

Figure 5 is a schematic cross-sectional rear view of the supercharged engine structure according to figure 1,
Figure 6 is a schematic side view of the supercharged engine structure according to figure 1, and

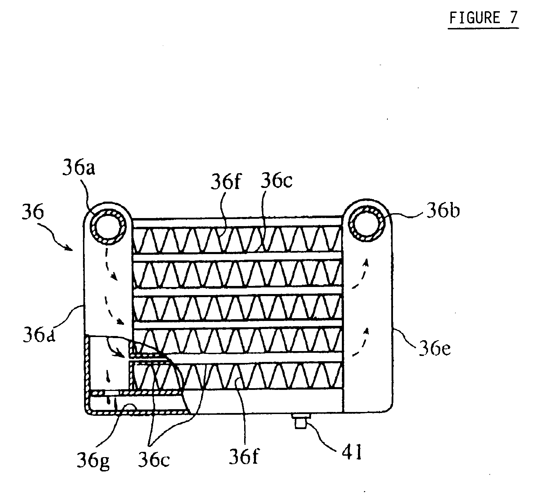

Figure 7 is a side view of the intercooler of said supercharged engine structure according to figure 1.

In the Figures, 1 represents the motor scooter type of two-wheeled vehicle used in the present embodiment, 2 is the vehicle frame, which is of the under-bone type, and therefore, when viewed from the side, the head pipe 2a connects to the top end of the L-shaped mainframe 2b. Side frames 2c, 2c connect to the left and right sides of the lower end of said main frame 2b, and both of said side frames 2c rise upward and then extend rearward. Axially supported on the foregoing head pipe 2a is the front fork 4, free to steer left and right, and said fork 4 axially supports the front wheel 3 at its lower end. The steering handlebars 5 are attached to the top of the foregoing front fork 4.

The foregoing steering handlebars 5 are enclosed by a handlebar cover 6, while the foregoing head pipe 2a is covered by a fore cover 7a ad a rear cover 7b which constitute a split front cover 7. Foot boards 8 that serves as a foot rests are also located at the junction area between the foregoing main frame 2b and side frame 2c, and side covers 9 cover the foregoing side frame 2c on the left and right sides. The seat 11 is mounted atop the side covers 9. Beneath said seat 10 are a storage box 11 and a fuel tank 12.

A unit swing engine 15 is mounted in the area below the upward bend in the foregoing left and right side frames 2c. This engine 15 is mounted on a bracket 14 that spans across the foregoing side frames 2c, 2c, where a pivot shaft 16 enables the engine unit 17 to swing up and down. Further, a rear wheel drive device extends rearward, integrally from the right side of the engine unit. Said drive device 18 houses a belt-driven continuously by a variable transmission mechanism, which rests by its rear end on the back wheel. The rear suspension is supported at its lower end on the top surface of the rear end area of the drive case 18a of the foregoing rear wheel drive device 18, while the top end of the rear suspension is axially supported on the side frame 2c.

The above described engine unit 17 is a four-cycle, forced air cooled, single cylinder engine; its cylinder block 22 and cylinder head 23 are connected to its crankcase and a piston 24 is slidably inserted into the cylinder bore of said cylinder block 22. In addition, a connecting rod 25 links said piston 24 with the crank pin 26a on the crankshaft 26. A drive pulley (not shown) is connected to the left end of the foregoing crankshaft 26, a forced air cooling fan 51 which supplies coolant air to the foregoing engine unit 17 is attached on the right side. Further, the foregoing engine unit 17 is enclosed by an air shroud 50, and, when the foregoing cooling fan 51 draws in coolant air α and circulates it between the engine unit 17 and the air shroud 50, it cools the foregoing cylinder head 23, the cylinder block, etc., and then is expelled through an outlet 50a. 22a and 23a represent cylinder-block cooling fins and cylinder-head cooling fins, respectively. They increase the heat radiation surface.

The exhaust pipe 23 is connected to the exhaust port 23a which leads out from the bottom surface of the foregoing cylinder head 23, and the rear end of said exhaust pipe 28 is connected to a muffler 29 that is mounted on the right side of the rear wheel. The intake manifold 30 is connected to the air intake port 23b that leads out from the top surface of the foregoing cylinder head 23. The upstream end of said intake manifold is connected to a carburetor 31 that is located on the top surface of the foregoing cylinder block 22. An oil tank 32 is located to the right of the carburetor 31. Additionally, the foregoing exhaust port 23a, and air intake port 23b are opened and closed by an exhaust valve 111 and an air intake valve 110; said valves 111 and 110 are driven by the camshaft 112 and by exhaust and air intake tappets 114, 113.

In addition, the foregoing engine 15 is equipped with a connecting rod supercharging type of supercharger 33. This supercharger 33 is equipped with a connecting rod supercharger mechanism 33a, an air cleaner 35 that supplies filtered air to said supercharger mechanism, an intercooler 36 that cools the pressurized air delivered by said supercharger mechanism 33a, and a supercharger tank 37 that stores the pressurized air received from said intercooler 36 and supplies it to the cylinder bore while suppressing pressure fluctuations in the pressurized air. All the components of the supercharger device 35-37 are mounted so as to swing in conjunction with the above mentioned unit swing engine unit 15.

The aforementioned supercharger mechanism 33a divides the crank chamber into an air intake chamber A and a compression chamber B by bringing the connecting rod 25 and the crank web 26 b into sliding contact with the inside walls of the foregoing crankcase 21. In addition to there being an air intake opening 21a formed in the lower part of the left side wall of the foregoing crankcase 21 and passing into the foregoing air intake chamber A, an outlet 21b is formed in the top of the right side wall and passes into the foregoing compression chamber B. This design makes it possible to use the excursion of the foregoing connecting rod 25 as a volume supercharger to compress the intake air. The details of this structure are described in the above cited Japan Patent Application *Kokai* Publication Hei 6-93869.

Further, the foregoing connecting rod supercharger mechanism 33a is connected with a lubrication device 100. This lubrication device 100 supplies lubricating oil from the foregoing oil tank 32 through oil strainer 101 using the pumping pressure of the oil pump 102 to deliver it at pressure through the delivery pipe 103 to the foregoing connecting rod 25, crank web 26b, etc., to lubricate their sliding surfaces. This structure further provides for recovery and recycling of lubrication oil that collects in the bottom of the crankcase 21 by an oil return line 105 fitted with a check valve 104.

In the present embodiment, the connecting rod supercharger mechanism 33a locates the compression chamber B, which is at a high supercharging pressure, on the top, and the intake chamber A on the bottom, so that air drawn into the crankcase 21 from the bottom is compressed and expelled from the top. This arrangement allows simple and assured separation of the lubricating oil supplied by the foregoing lubrication device, which fails by its own weight inside the crankcase, thereby making it possible to inhibit the intermixing of lubricating oil with the pressurized air. The lubricating oil, that is separated as described above also serves as a sealing agent inside the crankcase 21 at the sliding surfaces between the connecting rod, etc., and the inside walls, thereby improving the air seal and increasing the supercharging pressure.

When viewed from the side, the above mentioned air cleaner 35 is approximately triangular in shape and contains an air cleaner element 35a. When viewed from the top, it is located in the corner formed by the left side wall of the cylinder block 22 and cylinder head and the front wall of the transmission case 18a. It is fastened by bolts to said transmission case 18a and to the crankcase 21. The inlet 35a of the air cleaner 35 opens inside the side cover 9 and is directed toward the inside of the frame; the outlet 35b is located at the bottom. The outlet 35b is connected to the air intake pipe, which is in turn connected to the air intake opening 21a of the foregoing crankcase 21.

Thus, the air passing through the air cleaner 35 flows from the top, downward and is introduced into the supercharging mechanism 33a, thereby preventing the air cleaner element from being contaminated by lubricating oil due to blow-back of air from the crank chamber. Further, since the outlet opening 35b of the foregoing air cleaner 35 is positioned near the intake 21a of the foregoing supercharging mechanism 33a, it is possible to reduce the passage length of the air intake pipe 40, which feature reduces the intake drag. This design further enables higher supercharging pressure, and by extension, improved engine performance. Further, the location of the intake opening 35a of the air cleaner inside the side cover near the top prevents rain water ad the like from entering the air cleaner

From the side, the foregoing intercooler 36 is an air cooled box approximately triangular in shape. The intake 51a for the foregoing cooling fan 51 located on the right side of the crankcase 21 is covered by the foregoing intercooler, and is mounted to the foregoing engine unit 17 by a bracket (not shown). In this manner the air introduced to cool the engine also serves as coolant air for the foregoing intercooler 36. This design eliminates the need for an electric fan to cool the intercooler and thereby reduces costs.

The foregoing intercooler 36 is constituted of a plurality of flat cooling pipes 36c inserted into an inlet and outlet header 36d, 36e at either end, and further, there are cooling fins 36f on the foregoing cooling pipes 36c to increase the surface for heat dissipation. Also an oil reservoir 36g is formed on the bottom of the foregoing intercooler 36 and there is a drain plug 41 in the bottom wall of said oil reservoir 36g.

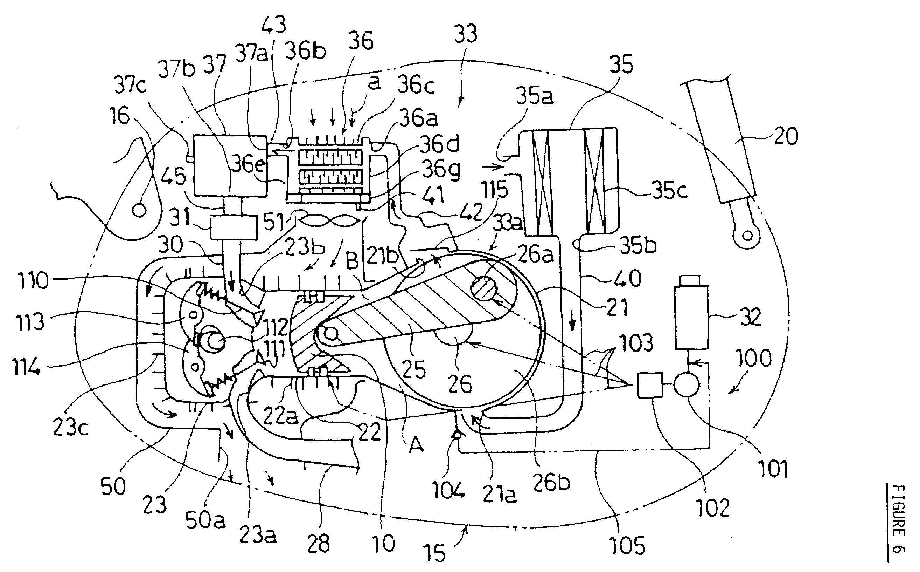

Formed at the top end of the header 36d at the inlet to the foregoing intercooler 36 is a pressurized air inlet 36a. This pressurized air inlet 36a is connected to the outlet 31b on the foregoing crankcase by an input-side air-intake pipe 42. A reed valve 115 is located at said connection to prevent the reverse flow of the pressurized air back into the crankcase 21. Further a pressurized-air outlet 36b is formed at the top of the foregoing outlet header 36e, and said pressurized-air outlet 36b is connected by the outlet-side air-intake pipe 43 to a connecting path 21c (not shown in Figure 6) is formed inside the foregoing crankcase 21 and connecting it with the pressurized air inlet 37a of a supercharger tank 37 further described below. In this manner the foregoing pressurized air inlet 36a and the outlet 36b are located above the vertical center of the intercooler, and, by so doing, any lubricating oil inside the intercooler 36 drops by its own weight into the oil reservoir 36g.

The foregoing supercharger tank 37 is positioned between the rear wheel transmission device 18 and the side frame 2c and fastened to the top surface of the transmission case 18a by bolts. The inside of this supercharger tank 37 is hollow, and the bottom serves as an oil reservoir and a drain plug 37c is inserted into a drain in said bottom wall.

An inlet 37a is formed in the bottom wall of the foregoing supercharger tank 37, and the upstream end of the opening is located above the foregoing oil reservoir. In addition, a pressurized air outlet 37b is formed on the upper inside wall of the foregoing supercharger tank 37, and said outlet 37b is connected by an air intake pipe 45, located above the foregoing crankcase 21, to the foregoing carburetor 31. Thus, the foregoing outlet 37b is located above the vertical center of the supercharger tank 37, and just as described above, lubrication oil drops by its own weight and falls into the oil reservoir.

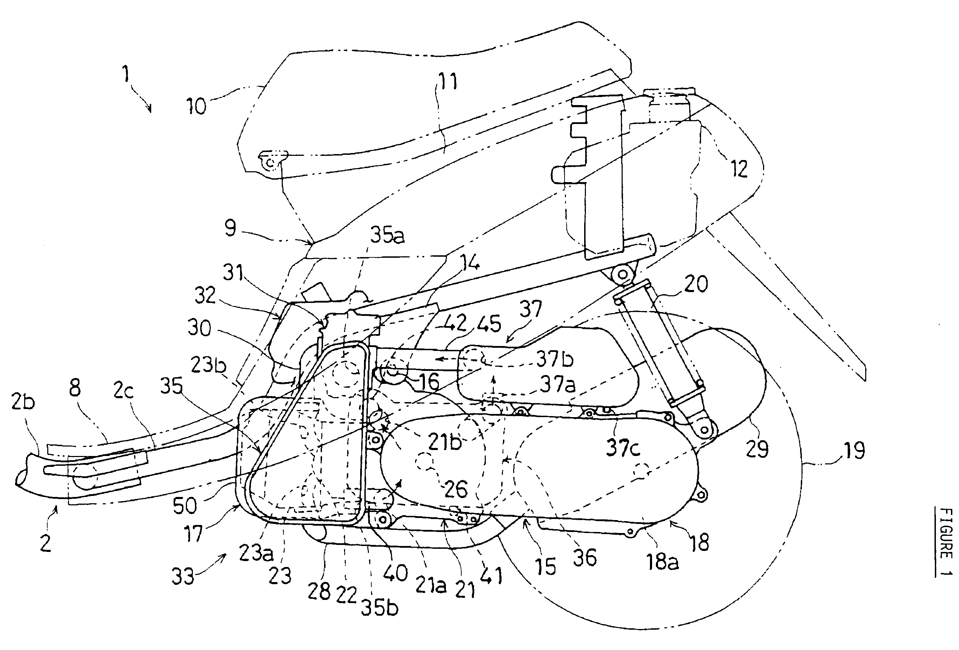

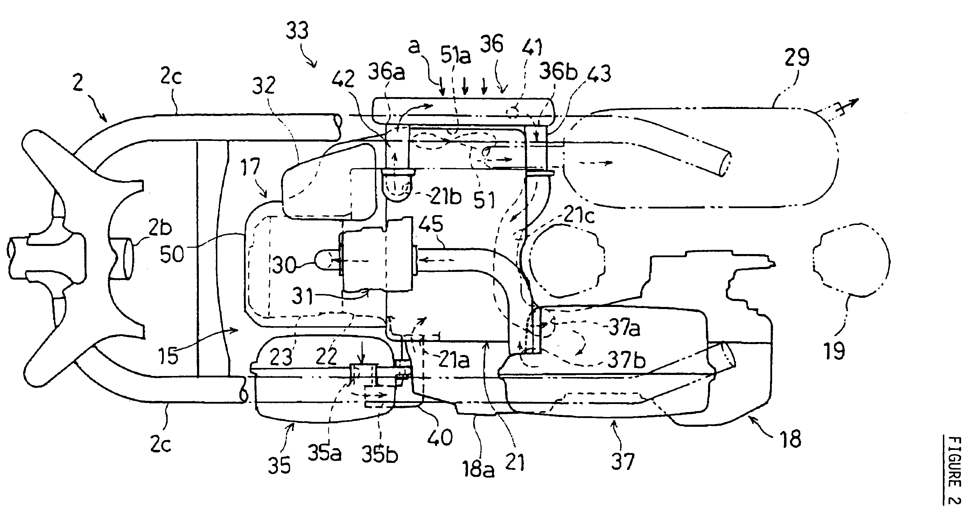

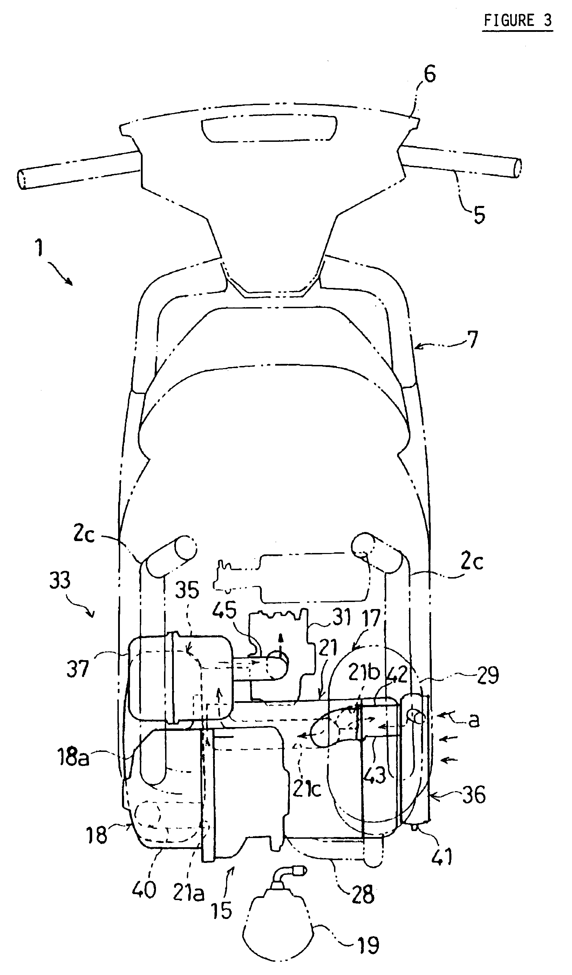

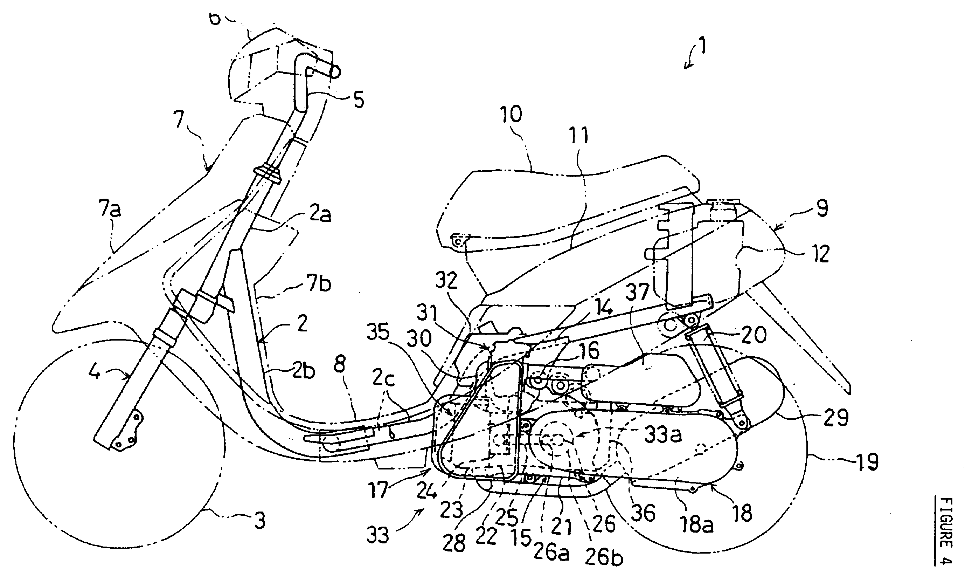

It is to be noted that particularly with respect to the relative height positions of the inlet and the outlet of said supercharger tank, figures 1 to 4 are relevant while figure 6 is a somewhat deformed figure mainly illustrating the complete flow through the engine.

The foregoing supercharger tank 37 and the carburetor 31 are located at about the same height in order to simplify the shape of the above described piping, and to allow more design freedom for its shape. Further, since the foregoing supercharger tank 37 is located on the same side as the transmission case, in other words, the opposite side from the muffler, even if the lubricating oil collecting inside the supercharger tank 37 were to bleed out, it would not hit the muffler 29 and produce white smoke.

Next, the operational effects of the present embodiment will be explained.

In the present invention, the supercharger 33, compresses the air that has been filtered by the air cleaner 35, after drawing it through the air intake pipe 40 into the crankcase 21, by means of the excursion of the connecting rod 25, and then said pressurized air is moved under pressure through the air intake pipe 42 into the intercooler, and subsequently the cooled pressurized air is moved under pressure through the air intake pipe 43 and connecting passage 21c to the supercharger tank 37 where it is stored. Then, the pressurized air inside said supercharger tank is fed to the carburetor 31 through the air intake pipe 45 where it is mixed with fuel and supplied through the intake manifold 30 to the combustion chamber. Next the exhaust gas is moved through the exhaust pipe 28 to the muffler 29, and subsequently it is expelled. (See the broken line arrows in Figures 1 through 3).

Thus, the present embodiment, functioning as described above, positions the pressurized air outlet 36b of the intercooler 36 near the top end of said intercooler 36, so that any lubrication oil inside said intercooler 36 falls by its own weight, separating from the pressurized air and collecting in the oil reservoir 36. This feature prevents intermixing lubricating oil with the pressurized air being fed to the supercharger tank 37, thereby avoiding any adverse effects on engine performance that would be caused by the inflow of such lubricating oil. The oil that collects in the oil reservoir 36g of the foregoing intercooler may be easily expelled through the drain plug 41. Here, in the present embodiment, the pressurized air inlet 36a is also located in the top part of the intercooler 36. This feature prevents the lubricating oil separated inside the intercooler from flowing backward into the supercharger mechanism 33a. However, the foregoing pressurized air inlet 36a may be located on the bottom side of the intercooler as well.

Further, since the outlet 37a from the supercharger tank 37 is also positioned at the top of said supercharger tank 37, any lubricating oil that was not separated in the foregoing intercooler 36 and that might flow into the tank would similarly drop by its own weight inside the supercharger tank 37, thereby further inhibiting its flow to the carburetor. This design feature also serves to prevent adverse effects on engine performance.

Further, since the component parts of the supercharger 33, that is, the air cleaner, 35, intercooler 36 and the supercharger tank 37 are all mounted to the unit swing engine unit 15 in the present embodiment, the foregoing component parts 35-37 swing in conjunction with the up-down swings of said engine unit 15. Since the various component parts do not move relative to each other, there is no need to use flexible means to connect the component parts 35-37, thereby allowing a simpler structure. Further, the various piping, 40, and 42-45 may be made of tough, high strength materials to improve the overall strength of device affixation.

In addition, since the foregoing component parts 35-37 are all attached to the engine unit 15, the space around the engine can be effectively used by locating the air cleaner 35 in the corner area between the cylinder block 21 and the transmission case 18 and by mounting the intercooler 36 on the right side of the crankcase, and further by attaching the supercharger tank 37 in the space between the transmission case 18a and the side frame 2c, thereby achieving a more compact supercharger.

The foregoing embodiment utilized a scooter type of motorcycle as the example, but the invention is not limited to this application: it may be utilized on any motorcycle having a unit swing engine mounting, or on cycles having the engine unit affixed to the frame.

As was described above, the supercharger for motorcycles of this invention places the pressurized-air outlet above the vertical center of the intercooler, and additionally forms an oil reservoir in the bottom of the intercooler so that lubricating oil inside the intercooler drops by its own weight into the foregoing oil reservoir, whereby any adverse effects on engine performance that would be caused by the intermixture of lubricating oil shall be prevented. The accumulated oil may further be easily recovered or expelled through a drain.

## Claims

1. Supercharged engine structure for a motorcycle comprising a connecting rod (25) substantially dividing an interior of a crankcase (21) into first and second air chambers (A, B), wherein the first air chamber (A) is connected to an air introduction unit via an air cleaner (35) while the second air chamber (B) connects to a combustion chamber via an intercooler (36) which cools the air output from said second air chamber (B) and an air intake passage connected to an outlet of said intercooler (36), wherein said second air chamber (B) serves as a compression chamber and said connecting rod forming a compressor element by changing an effective internal volume of the crankcase (21),
**characterized in that**
said outlet (36b) of said intercooler being located at an upper portion of said intercooler (36).

2. Supercharged engine structure according to claim 1, **characterized in that** said outlet (36b) of said intercooler (36) being located within an upper half of said intercooler (36).

3. Supercharged engine structure according to claim 1 or 2, **characterized in that** said outlet (36b) of said intercooler (36) being located at the uppermost side area of said intercooler (36) and an inlet (36a) of said intercooler (36) being also located adjacent the uppermost side area.

4. Supercharged engine structure according to at least one of the preceding claims 1 to 3, **characterized in that** an oil reservoir being formed in the bottom of said intercooler (36).

5. Supercharged engine structure according to at least one of the preceding claims 1 to 4, **characterized in that** said outlet (36b) of said intercooler (36) being connected to said combustion chamber via a supercharger tank (37) for storing pressurized air and a carburetor (31), wherein an inlet (37a) of said supercharger tank (37) being located at a lower position of said supercharger tank (37) and above an oil reservoir which is formed by a bottom wall of said supercharger tank (37) and an outlet (37b) of said supercharger tank (37) being located at an upper portion of said supercharger tank (37).

6. Supercharged engine structure according to at least one of the preceding claims 1 to 5, **characterized in that** said engine lying within a motorcycle frame is disposed such that the first air chamber (A) and an associated air inlet (21a) are located at a bottom area of said engine and said second air chamber (B) and an associated air outlet (21b) are located at a top area of said engine.

7. Supercharged engine structure according to at least one of the preceding claims 1 to 6, **characterized in that** a lubricating device (100) being provided for lubricating sliding surfaces of said connecting rod (25), a crank web (26a) and other spots to be directly lubricated, wherein a return line (105) is provided that collects lubricating oil at the bottom of the crankcase (21) and in that said lubricating oil serves as a sealing agent at the sliding surfaces between the connecting rod (25) and inside walls of the crankcase (21).

8. Supercharged engine structure according to at least one of the preceding claims 1 to 7, **characterized in that** said air cleaner (35) is provided with an air inlet (35a) which opens in a direction toward the engine at an upper top location of said air cleaner (35) and an air outlet (35b) which opens adjacent said crankcase air inlet (21a) located at a bottom area of said air cleaner (35).

9. Supercharged engine structure according to claim 8, **characterized in that** said air cleaner (35) being located at a front corner area of said engine structure sidewards beneath a cylinder block (22) and a transmission case (18a).

10. Supercharged engine structure according to at least one of the preceding claims 5 to 9, **characterized in that** said supercharger tank (37) being located on the same side and above said transmission case (18a) and on the opposite side relative to a muffler (29), wherein said supercharger tank outlet (37b) is disposed at substantially the same height as an inlet of said carburetor (31).

11. Supercharged engine structure according to claim 10, **characterized in that** said intercooler (36) being located on the same side of the crankcase (21) as said muffler (29) and in front of said muffler (29).

12. Supercharged engine structure according to at least one of the preceding claims 5 to 11, **characterized in that** said intercooler (36), said air cleaner (35) and said supercharger tank (37) are connected with the cylinder block so as to form a unit swing type engine (15) and swing together substantially free from displacement relatively to each other.

13. Supercharged engine structure according to claim 12, **characterized in that** said air cleaner (35), said intercooler (36), said supercharger tank (37) and said cylinder block are connected together via rigid pipings (40, 42-45).
